# EUROPÄISCHE PATENTSCHRIFT

(11) **EP 3 165 761 B1**
(45) Veröffentlichungstag und Bekanntmachung des Hinweises auf die Patenterteilung: **22.05.2019**
(21) Anmeldenummer: 15192757.1
(22) Anmeldetag: 03.11.2015
(51) Int. Cl.: F03D 1/06, F03D 80/40, F03D 80/30

(54) **WINDENERGIEANLAGENROTORBLATT MIT EINER ELEKTRISCHEN HEIZEINRICHTUNG**
WIND TURBINE ROTOR BLADE WITH AN ELECTRIC HEATING DEVICE
PALE DE ROTOR D'ÉOLIENNE DOTÉE D'UN DISPOSITIF DE CHAUFFAGE ELECTRIQUE

(43) Veröffentlichungstag der Anmeldung: 10.05.2017
(73) Patentinhaber: Nordex Energy GmbH, 22419 Hamburg (DE)
(72) Erfinder: Klein, Hendrik, 18147 Rostock (DE)
(74) Vertreter: Hauck Patentanwaltspartnerschaft mbB

(56) Entgegenhaltungen:
- EP-A1- 2 602 455
- EP-A1- 2 857 678
- WO-A1-2011/127997
- DE-U1-202013 007 659

## Beschreibung

Die Erfindung betrifft ein Windenergieanlagenrotorblatt mit einer elektrischen Heizeinrichtung zur Beheizung eines beheizbaren Oberflächenbereichs, welcher sich über einen Längsabschnitt des Windenergieanlagenrotorblatts erstreckt, wobei die elektrische Heizeinrichtung ein blattspitzenseitiges Ende, ein blattwurzelseitiges Ende und zwei profilendkantenseitige Ränder hat. Entlang der profilendkantenseitigen Ränder sind zwei äußere elektrische Leiter mit der elektrischen Heizeinrichtung verbunden, sodass die elektrische Heizeinrichtung über die beiden äußeren elektrischen Leiter mit einem Heizstrom versorgt werden kann.

Derartige elektrische Heizeinrichtungen werden eingesetzt, um einer Vereisung der Rotorblätter entgegenzuwirken. Sie bestehen aus einem elektrisch leitfähigen Material und werden im Betrieb von einem Heizstrom durchflossen, der zu einer Erwärmung der Heizeinrichtung führt. Dadurch kann einerseits bereits anhaftendes Eis abgetaut werden (*de-icing*), andererseits kann einer Vereisung vorgebeugt werden (*anti-icing*).

Um den gewünschten Effekt zu erzielen, muss in dem gesamten beheizbaren Oberflächenbereich eine ausreichende Temperaturdifferenz zur Umgebung erreicht werden. Gleichzeitig ist eine übermäßige Erwärmung zu vermeiden, insbesondere um eine Schädigung des Rotorblatts zu verhindern. Eine über das notwendige Maß hinausgehende Beheizung soll außerdem vermieden werden, um den Energieverbrauch der Heizeinrichtung so gering wie möglich zu halten.

Aus der Druckschrift DE 20 2012 101 705 U1 ist ein Windenergieanlagenrotorblatt mit einer elektrischen Heizeinrichtung bekannt geworden, die über zwei in Längsrichtung der Heizeinrichtung verlaufende Elektroden bestromt wird und die eine Gelschicht aufweisen soll.

Aus der Druckschrift EP 2 602 455 A1 ist ein Windenergieanlagenrotorblatt mit einer längsbestromten elektrischen Heizeinrichtung bekannt geworden. Die Heizeinrichtung weist drei in Längsrichtung erstreckte Heizelemente auf, deren blattspitzenseitige Enden miteinander verbunden sind. Drei elektrische Anschlussleitungen sind mit den blattwurzelseitigen Enden der drei Heizelemente verbunden.

Aus der Druckschrift WO 2011/127996 A1 ist ein Windenergieanlagenrotorblatt mit einer elektrischen Heizeinrichtung bekannt geworden, die mehrere teils in Reihe geschaltete Abschnitte aufweist. Sie verläuft schleifenförmig von einem blattwurzelseitigen Ende bis hin zu einem blattspitzenseitigen Ende und zurück und ist im Bereich der Blattwurzel an elektrische Leitungen angeschlossen. Aus der Druckschrift WO 2011/127997 A1 ist ein ähnliches Windenergieanlagenrotorblatt bekannt geworden, bei dem die elektrische Heizeinrichtung ebenfalls schleifenförmig verläuft und in Längsrichtung bestromt ist.

Aus den beiden US-Patenten Nr. 5,947,418 und Nr. 6,338,455 sind Rotorblätter für Helikopter bekannt geworden, die mehrere, in Längsrichtung der Rotorblätter verlaufende Streifen aufweisen, deren blattspitzenseitigen Enden miteinander verbunden und deren blattwurzelseitige Enden an elektrische Anschlussleitungen angeschlossen sind. Sie werden ebenfalls schleifenförmig von der Blattwurzel hin zur Blattspitze und zurück von einem Heizstrom durchflossen.

Aus der Druckschrift WO 2011/096851 A1 ist ein Windenergieanlagenrotorblatt mit einer elektrischen Heizeinrichtung bekannt geworden, die aus unterschiedlichen Heizelementen und Leitungen besteht, die jeweils Kohlenstoff-Nanoröhrchen aufweisen. Die beheizbare Oberfläche ist in zahlreiche Felder unterteilt, denen jeweils ein Vereisungssensor zugeordnet ist. Wird in einem der Felder eine Vereisung festgestellt, soll gezielt dieses Feld beheizt werden können.

Aus der Druckschrift EP 2 806 160 A1 ist ein Windenergieanlagenrotorblatt mit einer elektrischen Heizeinrichtung bekannt geworden, die über zwei äußere elektrische Leitungen mit einem Heizstrom versorgt wird. Die elektrischen Leitungen dienen zugleich als Blitzschutzleiter.

Aus der Druckschrift EP 2 843 228 A1 ist ein Windenergieanlagenrotorblatt mit einem elektrischen Heizelement bekannt geworden, das aus Bündeln elektrisch leitfähiger Fasern, die jeweils einen einzelnen Strompfad bilden, aufgebaut ist. Die Stromversorgung erfolgt über zwei in Längsrichtung des Rotorblatts verlaufende elektrische Leitungen, die mit den einzelnen Faserbündeln verbunden sind.

Davon ausgehend ist es die Aufgabe der Erfindung, ein Windenergieanlagenrotorblatt mit einer elektrischen Heizeinrichtung zur Verfügung zu stellen, das einfach aufgebaut ist und unter unterschiedlichen Betriebsbedingungen eine bedarfsgerechte Heizleistung aufweist.

Diese Aufgabe wird gelöst durch das Windenergieanlagenrotorblatt mit den Merkmalen des Anspruchs 1. Vorteilhafte Ausgestaltungen sind in den sich anschließenden Unteransprüchen angegeben.

Das Windenergieanlagenrotorblatt hat
- eine elektrische Heizeinrichtung zur Beheizung eines beheizbaren Oberflächenbereichs, der sich über einen Längsabschnitt des Windenergieanlagenrotorblatts erstreckt, wobei die elektrische Heizeinrichtung ein blattspitzenseitiges Ende, ein blattwurzelseitiges Ende und zwei profilendkantenseitige Ränder aufweist, und
- zwei äußere elektrische Leiter, die entlang der profilendkantenseitigen Ränder mit der elektrischen Heizeinrichtung verbunden sind und über die die elektrische Heizeinrichtung mit einem Heizstrom versorgt werden kann, und
- mindestens einen mittleren elektrischen Leiter, der in einem Abstand von den beiden profilendkantenseitigen Rändern mit der elektrischen Heizeinrichtung verbunden ist derart, dass die elektrische Heizeinrichtung von dem mindestens einen mittleren elektrischen Leiter in mindestens zwei jeweils über den Längsabschnitt erstreckte Teilbereiche unterteilt ist, die getrennt voneinander über zwei der Leiter mit einem elektrischen Heizstrom versorgt werden können.

Mit dem beheizbaren Oberflächenbereich des Windenergieanlagenrotorblatts ist die gesamte äußere Fläche des Windenergieanlagenrotorblatts gemeint, die mit der elektrischen Heizeinrichtung beheizt werden kann. Außerhalb des beheizbaren Oberflächenbereichs ist eine Beheizung des Windenergieanlagenrotorblatts nicht möglich. Der Längsabschnitt, über den sich der beheizbare Oberflächenbereich erstreckt, kann sich über mindestens 25 %, über mindestens 40 %, über mindestens 60 % oder über mindestens 80 % der Gesamtlänge des Windenergieanlagenrotorblatts erstrecken. Er kann insbesondere bis nahe an eine Blattspitze heranreichen. Der beheizbare Oberflächenbereich kann eine Profilnasenkante einschließen und sich von dort in Strömungsrichtung entlang der Druckseite und entlang der Saugseite ein Stück weit in Richtung zur Profilendkante hin erstrecken, wo er jeweils einen profilendkantenseitigen Rand aufweist.

Die beiden äußeren elektrischen Leiter können aus Metall bestehen, insbesondere aus Kupfer, und sind entlang der profilendkantenseitigen Ränder mit der elektrischen Heizeinrichtung verbunden. Hierzu können sie im Bereich der profilendkantenseitigen Ränder angeordnet sein. Sie können über die gesamte Länge der elektrischen Heizeinrichtung mit dieser in elektrischem Kontakt stehen, oder abschnitts- oder punktweise. In jedem Fall ist die elektrische Heizeinrichtung so mit den beiden äußeren elektrischen Leitern verbunden, dass bei einer Bestromung der Heizeinrichtung über die beiden äußeren Leiter der gesamte beheizbare Oberflächenbereich erwärmt wird.

Bei der Erfindung gibt es mindestens einen mittleren elektrischen Leiter, der in einem Abstand von den beiden profilendkantenseitigen Rändern mit der elektrischen Heizeinrichtung verbunden ist. Er kann zwischen den beiden profilendkantenseitigen Rändern angeordnet sein, beispielsweise nahe einer Profilnasenkante oder zwischen der Profilnasenkante und einem profilendkantenseitigen Rand. Bei Verwendung mehrerer mittlerer elektrischer Leiter können diese zwischen den äußeren elektrischen Leitern verteilt angeordnet sein, beispielsweise in etwa gleichmäßigen Abständen voneinander und von den äußeren elektrischen Leitern. Sämtliche elektrischen Leiter, also die äußeren elektrischen Leiter und der mindestens eine mittlere elektrische Leiter, können im Wesentlichen entlang der Längsrichtung des Windenergieanlagenrotorblatts angeordnet sein. Dies bezieht sich insbesondere auf den Längsabschnitt, in dem die elektrische Heizeinrichtung angeordnet ist. Vom blattwurzelseitigen Ende der elektrischen Heizeinrichtung können die elektrischen Leiter weiter bis zur Blattwurzel geführt sein, wo sie über die Nabe eines mit dem Windenergieanlagenrotorblatt versehenen Rotors einer Windenergieanlage mit elektrischem Strom versorgt werden können. Die beiden äußeren elektrischen Leiter und der mindestens eine mittlere elektrische Leiter können sich jeweils über den gesamten Längsabschnitt erstrecken.

Der mindestens eine mittlere elektrische Leiter unterteilt die elektrische Heizeinrichtung in mindestens zwei jeweils über den Längsabschnitt erstreckte Teilbereiche. Die Teilbereiche können jeweils einen langgestreckten Streifen bilden, der eine gleichmäßige Breite oder eine von dem blattwurzelseitigen Ende zum blattspitzenseitigen Ende hin abnehmende Breite aufweisen kann. Insbesondere kann jeder der Teilbereiche im Wesentlichen trapezförmig ausgebildet sein.

Jeder der Teilbereiche kann über zwei Leiter mit einem elektrischen Heizstrom versorgt werden. Bei Verwendung eines einzigen mittleren Leiters kann einer der Teilbereiche über einen der äußeren Leiter und den mittleren Leiter versorgt werden, der andere Teilbereich über den anderen äußeren Leiter und den mittleren Leiter. Der mittlere Leiter ist somit für die Versorgung beider an ihn angrenzenden Teilbereiche zuständig. Die Teilbereiche sind elektrisch in Reihe geschaltet, wobei die Endpunkte der Reihenschaltung mit den beiden äußeren Leitern verbunden sind und zwischen zwei benachbarten Teilbereichen jeweils ein Knotenpunkt gebildet ist, der mit einem mittleren Leiter verbunden ist. Es werden daher nur sehr wenige Anschlusspunkte benötigt, um die gesamte elektrische Heizeinrichtung gezielt und auf unterschiedliche Weise mit Strom zu versorgen. Insbesondere ermöglicht eine geeignete Beschaltung der beiden äußeren Leiter und des mindestens einen mittleren Leiters eine gezielte Beheizung lediglich eines Teilbereichs, einzelner Teilbereiche oder aller Teilbereiche. Selbst wenn nur eine einzige und konstante Versorgungsspannung für die elektrische Heizeinrichtung zur Verfügung steht, ermöglicht die erfindungsgemäße Anordnung eine einfache Anpassung der Heizleistung. Beispielsweise kann die Versorgungsspannung an die beiden äußeren Leiter angelegt werden. Dann werden sämtliche Teilbereiche von dem Heizstrom durchströmt. Dabei ist der Heizstrom für alle Teilbereiche gleich groß und relativ gering, da die elektrischen Widerstände aller Teilbereiche in Reihe geschaltet sind. Alternativ können beispielsweise zwei Teilbereiche parallel geschaltet werden, indem ein Pol der Versorgungsspannung beispielsweise an die beiden äußeren Leiter angelegt wird, der andere Pol an einen dazwischen angeordneten, mittleren Leiter. Natürlich kann auch jeder der Teilbereiche einzeln und unabhängig von den angrenzenden Teilbereichen an die Versorgungsspannung angeschlossen werden.

In einer Ausgestaltung sind genau zwei der mittleren elektrischen Leiter vorhanden, sodass die elektrische Heizeinrichtung in drei jeweils über den Längsabschnitt erstreckte Teilbereiche unterteilt ist, wobei eine Profilnasenkante des Windenergieanlagenrotorblatts in einem mittleren der drei Teilbereiche angeordnet ist. Im Bereich der Profilnasenkante ist die Gefahr einer Vereisung des Windenergieanlagenrotorblatts in der Regel besonders ausgeprägt, sodass bei Verwendung zweier mittlerer Leiter dieser kritische Bereich gezielt beheizt werden kann.

In einer Ausgestaltung sind elektrische Verbindungen zwischen der elektrischen Heizeinrichtung und den Leitern durch Verkleben, Verschweißen, Vernieten oder Verschrauben hergestellt. Beim Verkleben kann beispielsweise ein elektrisch leitfähiger Klebstoff verwendet werden. Alle genannten Verbindungsformen stellen eine galvanische Verbindung her. Weist die elektrische Heizeinrichtung Kohlenstofffasern auf, können diese somit unmittelbar mit den elektrischen Leitern verbunden werden.

In einer Ausgestaltung weist die elektrische Heizeinrichtung ein flächiges Kohlenstofffasermaterial auf. Beispielsweise können Gelege oder Gewebe aus Kohlenstofffasern oder Kohlenstofffaserbündeln, sogenannten *Rovings*, verwendet werden. Derartige flächige Kohlenstofffasermaterialien, auch als Heizmatten bezeichnet, weisen eine relativ homogene elektrische Leitfähigkeit auf. Da die einzelnen Kohlenstofffasern untereinander im elektrischen Kontakt stehen, bei Geweben insbesondere im Bereich von Kreuzungspunkten, ist die elektrische Leitfähigkeit relativ robust gegenüber Beschädigungen einzelner Fasern. Flächige Kohlenstofffasermaterialien sind einfach zu verarbeiten und erreichen eine über die Fläche relativ gleichmäßige Heizleistung.

In einer Ausgestaltung weist die elektrische Heizeinrichtung elektrisch leitfähige Faserbündel auf, die jeweils mit mindestens zwei der elektrischen Leiter elektrisch verbunden und voneinander elektrisch isoliert sind. In dieser Ausgestaltung bildet jedes Faserbündel einen einzelnen Strompfad. Die Faserbündel können insbesondere mäanderförmig angeordnet sein, sodass die Länge der Strompfade mit Blick auf die benötigte Heizleistung gezielt gewählt werden kann. Dadurch kann die elektrische Heizeinrichtung so ausgelegt werden, dass sie eine bedarfsgerechte Heizleistung erreicht. Die elektrisch leitfähigen Faserbündel können beispielsweise aus Kohlenstofffasern, Kupferlegierungen oder Edelstahlfasern bestehen.

In einer Ausgestaltung weist mindestens eines der elektrisch leitfähigen Faserbündel zwei Enden auf, die jeweils mit einem der beiden äußeren elektrischen Leiter elektrisch verbunden sind, und einen mittleren Abschnitt, der den mindestens einen mittleren elektrischen Leiter kreuzt und mit diesem elektrisch leitend verbunden ist. Bevorzugt sind alle Faserbündel in dieser Weise verbunden. Die Faserbündel können so angeordnet werden, dass die Flächenleistung in den einzelnen Teilbereichen bedarfsgerecht vorgegeben werden kann.

In einer Ausgestaltung ist die von der elektrischen Heizeinrichtung zur Verfügung gestellte spezifische Flächenheizleistung bei Anlegen einer definierten Spannung an jeweils zwei der Leiter, die benachbart angeordnet sind, in den jeweiligen Teilbereichen unterschiedlich groß. Eine besonders hohe Heizleistung in einem der Teilbereiche kann beispielsweise dadurch erzielt werden, dass die elektrische Heizeinrichtung zwischen den diesen Teilbereich begrenzenden elektrischen Leitern einen relativ geringen elektrischen Widerstand aufweist. Alternativ oder zusätzlich kann die Größe des Teilbereichs durch entsprechende Anordnung der elektrischen Leiter gezielt vorgegeben werden, sodass beispielsweise eine durch die elektrischen Eigenschaften der Heizeinrichtung bestimmte Heizleistung auf einer kleineren Fläche zur Verfügung gestellt wird und die spezifische Flächenleistung dort besonders hoch ist. Auf diese Weise kann beispielsweise im Bereich der Profilnasenkante eine höhere spezifische Flächenleistung vorgegeben werden, als in weiter zur Profilendkante hin angeordneten Teilbereichen.

In einer Ausgestaltung variiert die von der elektrischen Heizeinrichtung zur Verfügung gestellte spezifische Flächenheizleistung über die Länge eines Teilbereichs. Diese Maßnahme kann auch für mehr als einen der Teilbereiche, insbesondere für alle Teilbereiche, vorgesehen sein. Dadurch kann beispielsweise nahe der Blattspitze eine höhere Heizleistung pro Fläche zur Verfügung gestellt werden, als näher zur Blattwurzel hin. Auch zu diesem Zweck kann die Breite des betreffenden Teilbereichs über die Länge variiert werden und/oder es können die elektrischen Eigenschaften der Heizeinrichtung in dem Teilbereich angepasst werden. Beispielsweise kann ein mittlerer Teilbereich eine Vielzahl einzelner Faserbündel aufweisen, die jeweils mit zwei mittleren elektrischen Leitern verbunden sind, wobei die Länge der Faserbündel zwischen den beiden elektrischen Leitern zur Blattspitze hin abnimmt. Zusätzlich zu der Differenzierung über die unterschiedlichen Teilbereiche kann dadurch auch innerhalb einzelner Teilbereiche eine bedarfsgerechte Heizleistung zur Verfügung gestellt werden.

In einer Ausgestaltung ist eine Steuerung vorhanden, die dazu ausgebildet ist, die elektrische Heizeinrichtung in einer *de*-*icing*-Betriebsart, bei der alle Teilbereiche mit einer ersten Flächenheizleistung betrieben werden, und in einer *anti*-*icing*-Betriebsart, bei der ein mittlerer Teilbereich mit einer zweiten Flächenheizleistung betrieben wird, die größer ist als die erste Flächenheizleistung, und bei der die übrigen Teilbereiche mit einer dritten Flächenheizleistung betrieben werden, die geringer ist als die erste Flächenheizleistung, anzusteuern. Die de-icing-Betriebsart ist beispielsweise bei stehendem Rotor oder im Trudelbetrieb sinnvoll, wenn im gesamten beheizbaren Oberflächenbereich bereits Eis anhaftet. Sie führt dann zu einer relativ gleichmäßigen Erwärmung des gesamten beheizbaren Oberflächenbereichs. Die *anti-icing-*Betriebsart eignet sich insbesondere für den Produktionsbetrieb der Windenergieanlage, wenn eine relativ große Heizleistung im Bereich der Profilnasenkante benötigt wird, um diese eisfrei zu halten, während in den in Strömungsrichtung weiter hinten angeordneten Teilbereichen mit einer Vereisung eher nicht zu rechnen ist.

In einer Ausgestaltung weist das Windenergieanlagenrotorblatt mindestens einen Blitzschutzrezeptor auf, mit dem jeder der Leiter im Falle eines Blitzschlags elektrisch leitend verbunden ist. Der Blitzschutzrezeptor kann beispielsweise nahe einer Blattspitze des Windenergieanlagenrotorblatts angeordnet sein oder diese bilden. Die elektrischen Leiter, also beide äußeren elektrischen Leiter und alle vorhandenen, mittleren elektrischen Leiter, sind im Falle eines Blitzschlags, also beispielsweise über eine Funkenstrecke oder einen sonstigen Überspannungsschutz, mit dem Blitzschutzrezeptor verbunden. Im Falle eines Blitzschlags kann der sehr hohe Blitzstrom dann auf alle vorhandenen elektrischen Leiter verteilt werden. Dies kann eine Beschädigung der Leiter verhindern. Durch die Verbindung aller genannten Leiter untereinander über die Teilbereiche der elektrischen Heizeinrichtung kommt es außerdem zu einem Potentialausgleich zwischen den elektrischen Leitern, der zur Vermeidung von Überschlägen infolge elektromagnetischer Induktion erforderlich und ausreichend sein kann.

In einer Ausgestaltung sind einer der beiden äußeren Leiter und/oder beide äußeren Leiter und/oder der mindestens eine mittlere Leiter benachbart zu einem Gurt des Windenergieanlagenrotorblatts angeordnet und/oder in einen Gurtquerschnitt integriert. Die Unterteilung der elektrischen Heizeinrichtung orientiert sich in diesem Fall an der Anordnung der Gurte, was in vielen Fällen besonders zweckmäßig ist. Außerdem können die elektrischen Leiter fertigungstechnisch in die Gurtherstellung integriert werden, was die Montage des Windenergieanlagenrotorblatts vereinfachen kann. Mit Blick auf den Blitzschutz kann zugleich ein elektrischer Kontakt zwischen den Gurten und den elektrischen Leitern hergestellt werden, was im Falle elektrisch leitfähiger Gurte, insbesondere falls diese Kohlenstofffasern aufweisen, einer Beschädigung der Gurte entgegenwirkt.

In einer Ausgestaltung sind zwei der mittleren Leiter und vier Gurte vorhanden, wobei einer der beiden äußeren Leiter einem ersten, druckseitigen Gurt, der andere der beiden äußeren Leiter einem ersten, saugseitigen Gurt, einer der beiden mittleren Leiter einem zweiten, druckseitigen Gurt und der andere der beiden mittleren Leiter einem zweiten, saugseitigen Gurt zugeordnet ist. Damit, dass ein Leiter einem Gurt zugeordnet ist, ist insbesondere gemeint, dass der Leiter benachbart zu dem Gurt angeordnet oder in einen Querschnitt des Gurts integriert ist. Die genannte Anordnung der Leiter ist für Windenergieanlagenrotorblätter mit vier Gurten besonders zweckmäßig.

Die Erfindung wird nachfolgend anhand von in Figuren dargestellten Ausführungsbeispielen näher erläutert. Es zeigen:
- Fig. 1: ein erfindungsgemäßes Windenergieanlagenrotorblatt in einer vereinfachten, perspektivischen Ansicht,
- Figuren 2-4: drei weitere Ausführungsbeispiele erfindungsgemäßer Windenergieanlagenrotorblätter, jeweils in schematischen Querschnittsdarstellungen,
- Fig. 5: eine schematische Darstellung einer elektrischen Heizeinrichtung mit zwei äußeren und zwei mittleren elektrischen Leitern,
- Fig. 6: eine schematische Darstellung eines Ausschnitts einer elektrischen Heizeinrichtung mit zwei elektrisch leitfähigen Faserbündeln.

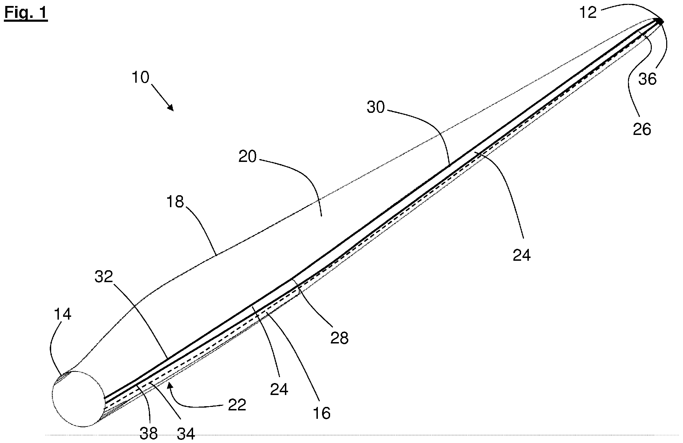

Das Windenergieanlagenrotorblatt 10 der Figur 1 hat eine Blattspitze 12, eine Blattwurzel 14, eine Profilnasenkante 16, eine Profilendkante 18, eine Druckseite 20 und eine Saugseite 22. Die elektrische Heizeinrichtung 24 entspricht in ihren Abmessungen einem beheizbaren Oberflächenbereich des Windenergieanlagenrotorblatts 10 und weist ein blattspitzenseitiges Ende 26, ein blattwurzelseitiges Ende 28 und zwei profilendkantenseitige Ränder 30, 31, von denen der auf der Druckseite 20 angeordnete, profilendkantenseitige Rand 30 sichtbar ist.

Zwei äußere elektrische Leiter 32, 34 verlaufen jeweils von der Blattwurzel 14 bis zu einem an der Blattspitze 12 angeordneten Blitzschutzrezeptor 36. In dem Längsabschnitt zwischen dem blattspitzenseitigen Ende 26 und dem blattwurzelseitigen Ende 28 der elektrischen Heizeinrichtung 24 verlaufen die beiden äußeren elektrischen Leiter 32, 34 entlang der profilendkantenseitigen Ränder 30, 31 und sind dort über ihre gesamte Länge mit der elektrischen Heizeinrichtung 24 elektrisch verbunden. Zwischen den beiden äußeren Leitern 32, 34 ist ein mittlerer elektrischer Leiter 38 angeordnet, der etwa entlang der Profilnasenkante 16 verläuft. Er erstreckt sich ebenfalls von der Blattwurzel 14 bis zu dem Blitzschutzrezeptor 36 an der Blattspitze 12 und ist entlang des beheizbaren Oberflächenbereichs über die gesamte Länge der elektrischen Heizeinrichtung 24 mit dieser elektrisch verbunden. Er unterteilt die elektrische Heizeinrichtung und somit den beheizbaren Oberflächenbereich in einen ersten Teilbereich, der im Wesentlichen auf der Druckseite angeordnet ist und sich von dem mittleren elektrischen Leiter 38 bis zum äußeren elektrischen Leiter 32 auf der Druckseite erstreckt. Der andere Teilbereich erstreckt sich von dem mittleren elektrischen Leiter 38 im Wesentlichen auf der Saugseite 22 bis hin zu dem auf der Saugseite 22 angeordneten, äußeren elektrischen Leiter 34.

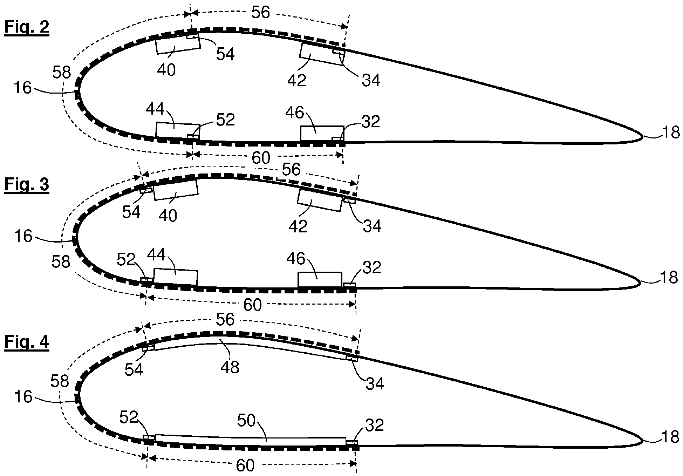

Die Figuren 2 bis 4 zeigen Querschnitte erfindungsgemäßer Rotorblätter. Die elektrische Heizeinrichtung 24 ist jeweils durch eine gestrichelte Linie angedeutet. Die Ausführungsbeispiele der Figuren 2 und 3 weisen jeweils vier Gurte 40 bis 46 auf. Die Gurte 40, 42 befinden sich auf der Saugseite 22 und sind in einem Abstand voneinander angeordnet. Die Gurte 44, 46 befinden sich auf der Druckseite 20 und sind ebenfalls in einem Abstand voneinander angeordnet.

Im Ausführungsbeispiel der Figur 2 ist der äußere elektrische Leiter 32 in den Querschnitt des druckseitigen Gurts 46 integriert. Der äußere elektrische Leiter 34 ist in den Querschnitt des saugseitigen Gurts 42 integriert. Außerdem gibt es zwei mittlere elektrische Leiter 52, 54, die in die Querschnitte der Gurte 40 bzw. 44 integriert sind. Alle elektrischen Leiter 32, 34, 52, 54 sind elektrisch mit der elektrischen Heizeinrichtung 24 verbunden. Die beiden mittleren elektrischen Leiter 52, 54 unterteilen die elektrische Heizeinrichtung und somit den beheizbaren Oberflächenbereich in drei Teilbereiche 56, 58 und 60.

Im Ausführungsbeispiel der Figur 3 sind die elektrischen Leiter 32, 34, 52, 54 ebenfalls mit der elektrischen Heizeinrichtung 24 verbunden, jedoch nicht in die Querschnitte der Gurte 40 bis 46 integriert, sondern jeweils benachbart zu einem dieser Gurte 40 bis 46 angeordnet.

Das Ausführungsbeispiel der Figur 4 weist lediglich zwei Gurte auf, nämlich zwei Hauptgurte 48, 50. Die elektrischen Leiter 32, 34, 52, 54 sind wie in den anderen Ausführungsbeispielen auch mit der elektrischen Heizeinrichtung 24 verbunden. Die Hauptgurte 48, 50 erstrecken sich in Richtung der Profiltiefe über einen größeren Bereich. Die elektrischen Leiter 34, 54 sind benachbart zu dem saugseitigen Hauptgurt 48 angeordnet. Die elektrischen Leiter 32, 52 sind benachbart zu dem druckseitigen Hauptgurt 50 angeordnet. Durch diese Anordnung der elektrischen Leiter entspricht der Teilbereich 56 im Wesentlichen den Abmessungen des saugseitigen Hauptgurts 48 und der Teilbereich 60 entspricht im Wesentlichen den Abmessungen des druckseitigen Hauptgurts 50, jeweils bezogen auf die Richtung der Profiltiefe.

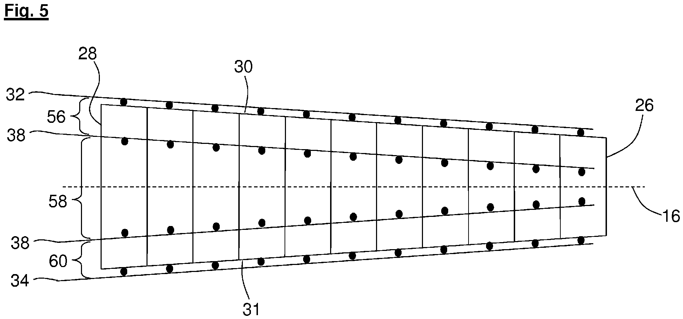

Figur 5 zeigt schematisch eine elektrische Heizeinrichtung mit einem blattwurzelseitigen Ende 28, einem blattspitzenseitigen Ende 26 und zwei profilendkantenseitigen Rändern 30, 31. Zwei äußere elektrische Leiter 32, 34 verlaufen entlang der profilendkantenseitigen Ränder 30, 31 und sind dort über die gesamte Länge der elektrischen Heizeinrichtung 24 mit dieser verbunden, wie durch die Punkte angedeutet. Die elektrische Heizeinrichtung und somit der beheizbare Oberflächenbereich wird durch zwei mittlere elektrische Leiter 38 in drei Teilbereiche 56, 58 und 60 unterteilt. Der mittlere Teilbereich 58 befindet sich im Bereich der gestrichelt angedeuteten Profilnasenkante 16.

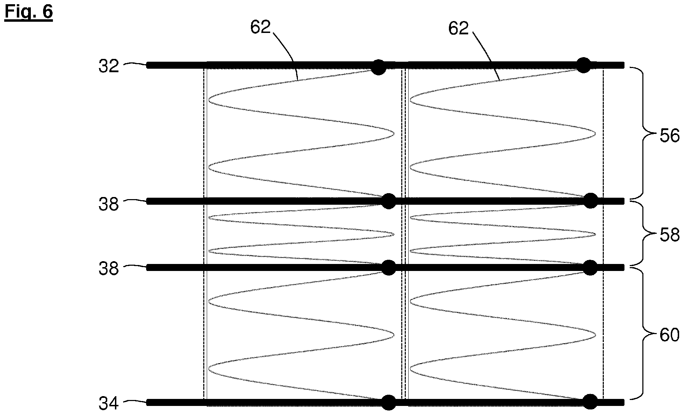

Figur 6 zeigt einen Ausschnitt der Anordnung aus Figur 5 vergrößert und in einer anderen, schematischen Darstellung. Man erkennt die beiden äußeren elektrischen Leiter 32, 34 und die beiden mittleren elektrischen Leiter 38 sowie zwei jeweils einen einzelnen Strompfad bildende elektrisch leitfähige Faserbündel 62, die mäanderförmig angeordnet sind und beispielsweise aus Kohlenstofffasern bestehen können. Die beiden Enden jedes Faserbündels 62 sind mit den beiden äußeren elektrischen Leitern 32, 34 verbunden. Dort, wo die Faserbündel 62 die mittleren Leiter 38 kreuzen, ist ebenfalls eine elektrische Verbindung zwischen den mittleren Leitern 38 und den entsprechenden mittleren Abschnitten der Faserbündel 62 hergestellt. Man erkennt in der Figur 6 schematisch, dass die Faserbündel 62 in dem mittleren Teilbereich 58 auf eine kleinere Fläche konzentriert sind, sodass dort eine höhere spezifische Flächenheizleistung erzielt wird.

### Liste der verwendeten Bezugszeichen:

- 10: Windenergieanlagenrotorblatt
- 12: Blattspitze
- 14: Blattwurzel
- 16: Profilnasenkante
- 18: Profilendkante
- 20: Druckseite
- 22: Saugseite
- 24: elektrische Heizeinrichtung
- 26: blattspitzenseitiges Ende
- 28: blattwurzelseitiges Ende
- 30, 31: profilendkantenseitige Ränder
- 32, 34: äußere elektrische Leiter
- 36: Blitzschutzrezeptor
- 38: mittlerer elektrischer Leiter
- 40, 42: saugseitige Gurte
- 44, 46: druckseitige Gurte
- 48: saugseitiger Hauptgurt
- 50: druckseitiger Hauptgurt
- 52, 54: mittlerer elektrischer Leiter
- 56, 58, 60: Teilbereiche
- 62: elektrisch leitfähige Faserbündel

## Patentansprüche

1. Windenergieanlagenrotorblatt (10) mit
• einer elektrischen Heizeinrichtung (24) zur Beheizung eines beheizbaren Oberflächenbereichs, der sich über einen Längsabschnitt des Windenergieanlagenrotorblatts (10) erstreckt, wobei die elektrische Heizeinrichtung (24) ein blattspitzenseitiges Ende (26), ein blattwurzelseitiges Ende (28) und zwei profilendkantenseitige Ränder (30, 31) aufweist, und
• zwei äußeren elektrischen Leitern (32, 34), die entlang der profilendkantenseitigen Ränder (30, 31) mit der elektrischen Heizeinrichtung (24) verbunden sind und über die die elektrische Heizeinrichtung (24) mit einem Heizstrom versorgt werden kann, **gekennzeichnet durch**
• mindestens einen mittleren elektrischen Leiter (38), der in einem Abstand von den beiden profilendkantenseitigen Rändern (30, 31) mit der elektrischen Heizeinrichtung (24) verbunden ist derart, dass die elektrische Heizeinrichtung von dem mindestens einen mittleren elektrischen Leiter (38) in mindestens zwei jeweils über den Längsabschnitt erstreckte Teilbereiche (56, 58, 60) unterteilt ist, die getrennt voneinander über zwei der Leiter (32, 34, 38) mit einem elektrischen Heizstrom versorgt werden können.

2. Windenergieanlagenrotorblatt (10) nach Anspruch 1, **dadurch gekennzeichnet, dass** genau zwei der mittleren elektrischen Leiter (38) vorhanden sind, so dass die elektrische Heizeinrichtung in drei jeweils über den Längsabschnitt erstreckte Teilbereiche (56, 58, 60) unterteilt ist, wobei eine Profilnasenkante (16) des Windenergieanlagenrotorblatts (10) in einem mittleren der drei Teilbereiche (56, 58, 60) angeordnet ist.

3. Windenergieanlagenrotorblatt (10) nach Anspruch 1 oder 2, **dadurch gekennzeichnet, dass** elektrische Verbindungen zwischen der elektrischen Heizeinrichtung (24) und den elektrischen Leitern (32, 34, 38) durch Verkleben, Verschweißen, Vernieten oder Verschrauben hergestellt sind.

4. Windenergieanlagenrotorblatt (10) nach einem der Ansprüche 1 bis 3, **dadurch gekennzeichnet, dass** die elektrische Heizeinrichtung (24) ein flächiges Kohlenstofffasermaterial aufweist.

5. Windenergieanlagenrotorblatt (10) nach einem der Ansprüche 1 bis 3, **dadurch gekennzeichnet, dass** die elektrische Heizeinrichtung (24) elektrisch leitfähige Faserbündel (62) aufweist, die jeweils mit mindestens zwei der elektrischen Leiter (32, 34, 38) elektrisch verbunden und voneinander elektrisch isoliert sind.

6. Windenergieanlagenrotorblatt (10) nach Anspruch 5, **dadurch gekennzeichnet, dass** mindestens eines der elektrisch leitfähigen Faserbündel (62) zwei Enden, die jeweils mit einem der beiden äußeren elektrischen Leiter (32, 34) elektrisch verbunden sind, und einen mittleren Abschnitt, der den mindestens einen mittleren elektrischen Leiter (38) kreuzt und mit diesem elektrisch leitend verbunden ist, aufweist.

7. Windenergieanlagenrotorblatt (10) nach einem der Ansprüche 1 bis 6, **dadurch gekennzeichnet, dass** die von der elektrischen Heizeinrichtung (24) zur Verfügung gestellte spezifische Flächenleistung bei Anlegen einer definierten Spannung an jeweils zwei der Leiter (32, 34, 38), die benachbart angeordnet sind, in den jeweiligen Teilbereichen (56, 58, 60) unterschiedlich groß ist.

8. Windenergieanlagenrotorblatt (10) nach einem der Ansprüche 1 bis 7, **dadurch gekennzeichnet, dass** die von der elektrischen Heizeinrichtung (24) zur Verfügung gestellte spezifische Flächenleistung über die Länge eines der Teilbereiche (56, 58, 60) variiert.

9. Windenergieanlagenrotorblatt (10) nach einem der Ansprüche 1 bis 8, **dadurch gekennzeichnet, dass** eine Steuerung vorhanden ist, die dazu ausgebildet ist, die elektrische Heizeinrichtung (24) in einer *de*-*icing*-Betriebsart, bei der alle Teilbereiche mit einer ersten Flächenleistung betrieben werden, und in einer *anti-icing*-Betriebsart, bei der ein mittlerer Teilbereich (58) mit einer zweiten Flächenleistung betrieben wird, die größer ist als die erste Flächenleistung, und bei der die übrigen Teilbereiche (56, 60) mit einer dritten Flächenleistung betrieben werden, die geringer ist als die erste Flächenleistung, anzusteuern.

10. Windenergieanlagenrotorblatt (10) nach einem der Ansprüche 1 bis 9, **dadurch gekennzeichnet, dass** das Windenergieanlagenrotorblatt (10) mindestens einen Blitzschutzrezeptor (36) aufweist, mit dem jeder der Leiter (32, 34, 38) im Falle eines Blitzschlags elektrisch leitend verbunden ist.

11. Windenergieanlagenrotorblatt (10) nach einem der Ansprüche 1 bis 10, **dadurch gekennzeichnet, dass** einer der beiden äußeren Leiter (32, 34) und/oder beide äußeren Leiter (32, 34) und/oder der mindestens eine mittlere Leiter (38) benachbart zu einem Gurt (40, 42, 44, 46, 48, 50) des Windenergieanlagenrotorblatts (10) angeordnet und/oder in einen Gurtquerschnitt integriert sind.

12. Windenergieanlagenrotorblatt (10) nach Anspruch 11, **dadurch gekennzeichnet, dass** zwei der mittleren Leiter (38) und vier Gurte (40, 42, 44, 46) vorhanden sind, wobei einer der beiden äußeren Leiter (32) einem ersten, druckseitigen Gurt (46), der andere der beiden äußeren Leiter (34) einem ersten, saugseitigen Gurt (42), einer der beiden mittleren Leiter (52) einem zweiten, druckseitigen Gurt (44) und der andere der beiden mittleren Leiter (54) einem zweiten, saugseitigen Gurt (40) zugeordnet ist.

## Claims

1. A wind turbine rotor blade (10) having
• an electric heating device (24) for heating a heatable surface region which extends over a longitudinal section of the wind turbine rotor blade (10), wherein the electric heating device (24) has a blade-tip-side end (26), a blade-root-side end (28) and two profile-trailing-edge-side edges (30, 31), and
• two outer electric conductors (32, 34) which are connected to the electric heating device (24) along the profile-trailing-edge-side edges (30, 31) and via which the electric heating device (24) can be supplied with a heating current, **characterized by**
• at least one central electric conductor (38) which is connected to the electric heating device (24) at a distance from the two profile-trailing-edge-side edges (30, 31) in such a way that the electric heating device is divided by the at least one central electric conductor (38) into at least two partial regions (56, 58, 60) which each extend over the longitudinal section and can be supplied with an electric heating current separately from one another via two of the conductors (32, 34, 38).

2. The wind turbine rotor blade (10) as claimed in claim 1, wherein precisely two of the central electric conductors (38) are present, with the result that the electric heating device is divided into three partial regions (56, 58, 60) each extending over the longitudinal section, wherein a profile nose edge (16) of the wind turbine rotor blade (10) is arranged in a central partial region of the three partial regions (56, 58, 60).

3. The wind turbine rotor blade (10) as claimed in claim 1 or 2, wherein electrical connections are produced between the electric heating device (24) and the electric conductors (32, 34, 38) by bonding, welding, riveting or screwing.

4. The wind turbine rotor blade (10) as claimed in one of claims 1 to 3, wherein the electric heating device (24) has a planar carbon fiber material.

5. The wind turbine rotor blade (10) as claimed in one of claims 1 to 3, wherein the electric heating device (24) has electrically conductive fiber bundles (62) which are each electrically connected to at least two of the electric conductors (32, 34, 38) and are electrically insulated from one another.

6. The wind turbine rotor blade (10) as claimed in claim 5, wherein at least one of the electrically conductive fiber bundles (62) has two ends which are each electrically connected to one of the two outer electric conductors (32, 34) and has a central section which intersects the at least one central electric conductor (38) and is connected thereto in an electrically conductive fashion.

7. The wind turbine rotor blade (10) as claimed in one of claims 1 to 6, wherein the specific area efficiency which is made available by the electric heating device (24) when a defined voltage is applied to in each case two of the conductors (32, 34, 38) which are arranged adjacent to one another in the respective partial regions (56, 58, 60) is of different magnitudes.

8. The wind turbine rotor blade (10) as claimed in one of claims 1 to 7, wherein the specific area efficiency which is made available by the electric heating device (24) varies over the length of one of the partial regions (56, 58, 60).

9. The wind turbine rotor blade (10) as claimed in one of claims 1 to 8, wherein a controller is present which is designed to actuate the electric heating device (24) in a *de-icing* operating mode in which all the partial regions are operated with a first area efficiency, and in an *anti-icing* operating mode in which a central partial region (58) is operated with a second area efficiency which is higher than the first area efficiency and in which the other partial regions (56, 60) are operated with a third area efficiency which is lower than the first area efficiency.

10. The wind turbine rotor blade (10) as claimed in one of claims 1 to 9, wherein the wind turbine rotor blade (10) has at least one lightning arrestor receptor (36) to which each of the conductors (32, 34, 38) is connected in an electrically conductive fashion in the case of a lightning strike.

11. The wind turbine rotor blade (10) as claimed in one of claims 1 to 10, wherein one of the two outer conductors (32, 34) and/or both outer conductors (32, 34) and/or the at least one central conductor (38) is/are arranged adjacent to a spar cap (40, 42, 44, 46, 48, 50) of the wind turbine rotor blade (10) and/or is/are integrated into a spar cap cross section.

12. The wind turbine rotor blade (10) as claimed in claim 11, wherein two of the central conductors (38) and four spar caps (40, 42, 44, 46) are present, wherein one of the two outer conductors (32) is assigned to a first, pressure-side spar cap (46), the other of the two outer conductors (34) is assigned to a first, suction-side spar cap (42), one of the two central conductors (52) is assigned to a second, pressure-side spar cap (44), and the other of the two central conductors (54) is assigned to a second, suction-side spar cap (40).

## Revendications

1. Pale de rotor d'éolienne (10) comprenant :
• un dispositif de chauffage électrique (24) destiné à chauffer une zone de surface chauffable, laquelle s'étend sur une section longitudinale de la pale de rotor d'éolienne (10), le dispositif de chauffage électrique (24) présentant une extrémité côté pointe de pale (26), une extrémité côté base de pale (28) et deux bords côté arête d'extrémité de profil (30, 31), et
• deux conducteurs électriques externes (32, 34) reliés au dispositif de chauffage électrique (24) le long des bords côté arête d'extrémité de profil (30, 31) et par le biais desquels le dispositif de chauffage électrique (24) peut être alimenté en courant de chauffage, **caractérisée par**
• au moins un conducteur électrique du milieu (38) relié au dispositif de chauffage électrique (24) en étant espacé des deux bords côté arête d'extrémité de profil (30, 31), de telle façon que le dispositif de chauffage électrique est divisé par l'au moins un conducteur électrique du milieu (38) en au moins deux zones partielles s'étendant respectivement sur la section longitudinale, lesquelles peuvent être alimentées séparément en courant de chauffage électrique par deux des conducteurs (32, 34, 38).

2. Pale de rotor d'éolienne (10) selon la revendication 1, **caractérisée en ce qu'**il est prévu exactement deux conducteurs électriques du milieu (38), de telle façon que le dispositif de chauffage électrique est divisé en trois zones partielles (56, 58, 60) s'étendant respectivement sur la section longitudinale, une arête de nez de profil (16) de la pale de rotor d'éolienne (10) étant disposée dans une zone du milieu parmi les trois zones partielles (56, 58, 60).

3. Pale de rotor d'éolienne (10) selon la revendication 1 ou 2, **caractérisée en ce que** des liaisons électriques sont réalisées entre le dispositif de chauffage électrique (24) et les conducteurs électriques (32, 34, 38) par collage, soudage, rivetage ou vissage.

4. Pale de rotor d'éolienne (10) selon l'une des revendications 1 à 3, **caractérisée en ce que** le dispositif de chauffage électrique (24) présente un matériau à base de fibres de carbone.

5. Pale de rotor d'éolienne (10) selon l'une des revendications 1 à 3, **caractérisée en ce que** le dispositif de chauffage électrique (24) présente des faisceaux de fibres électriquement conducteurs (62), lesquels sont respectivement reliés électriquement à au moins deux des conducteurs électriques (32, 34, 38) et isolés électriquement les uns des autres.

6. Pale de rotor d'éolienne (10) selon la revendication 5, **caractérisée en ce qu'**au moins un des faisceaux de fibres électriquement conducteurs (62) présente deux extrémités, lesquelles sont respectivement reliées à un des deux conducteurs électriques externes (32, 34), et une section du milieu, laquelle croise l'au moins un conducteur électrique du milieu (38) tout en étant reliée à celui-ci de façon électriquement conductrice.

7. Pale de rotor d'éolienne (10) selon l'une des revendications 1 à 6, **caractérisée en ce que** la puissance de surface spécifique mise à disposition par le dispositif de chauffage électrique (24) est différente dans chacune des zones partielles (56, 58, 60) lors de l'application d'une tension définie respectivement à deux des conducteurs (32, 34, 38) qui sont disposés adjacents.

8. Pale de rotor d'éolienne (10) selon l'une des revendications 1 à 7, **caractérisée en ce que** la puissance de surface spécifique mise à disposition par le dispositif de chauffage électrique (24) varie sur la longueur de l'une des zones partielles (56, 58, 60).

9. Pale de rotor d'éolienne (10) selon l'une des revendications 1 à 8, **caractérisée en ce qu'**il est prévu une commande conçue pour commander le dispositif de chauffage électrique (24) dans un mode de fonctionnement de dégivrage, dans lequel toutes les zones partielles fonctionnent avec une première puissance de surface, et dans un mode de fonctionnement d'antigel, dans lequel une zone partielle du milieu (58) fonctionne avec une deuxième puissance de surface, laquelle est supérieure à la première puissance de surface, et dans lequel les autres zones partielles (56, 60) fonctionnent avec une troisième puissance de surface, laquelle est inférieure à la première puissance de surface.

10. Pale de rotor d'éolienne (10) selon l'une des revendications 1 à 9, **caractérisée en ce que** la pale de rotor d'éolienne (10) présente au moins un récepteur de parafoudre (36), auquel chacun des conducteurs (32, 34, 38) est relié de façon électriquement conductrice en cas de foudre.

11. Pale de rotor d'éolienne (10) selon l'une des revendications 1 à 10, **caractérisée en ce qu'**un des deux conducteurs externes (32, 34) et/ou les deux conducteurs externes (32, 34) et/ou l'au moins un conducteur du milieu (38) est/sont disposé(s) à côté d'une membrure (40, 42, 44, 46, 48, 50) de la pale de rotor d'éolienne (10) et/ou intégré(s) dans une section transversale de membrure.

12. Pale de rotor d'éolienne (10) selon la revendication 11, **caractérisée en ce qu'**il est prévu deux des conducteurs du milieu (38) et quatre membrures (40, 42, 44, 46), l'un des deux conducteurs externes (32) étant attribué à une première membrure côté pression (46), l'autre des deux conducteurs externes (34) étant attribué à une première membrure côté aspiration (42), l'un des deux conducteurs du milieu (52) étant attribué à une deuxième membrure côté pression (44) et l'autre des deux conducteurs du milieu (54) étant attribué à une deuxième membrure côté aspiration (40).
